# EUROPÄISCHE PATENTANMELDUNG

(11) **EP 4 717 070 A1**
(43) Veröffentlichungstag der Anmeldung: **01.04.2026**
(21) Anmeldenummer: 25193694.4
(22) Anmeldetag: 04.08.2025
(51) Int. Cl.: A01D 41/127, G01N 21/15, A01D 41/12, A01D 43/08, G01N 21/84, G01N 21/85

(54) **LANDWIRTSCHAFTLICHE ERNTEMASCHINE MIT EINER OPTISCHEN MESSEINRICHTUNG**

(30) Priorität: 25.09.2024 DE 102024127714
(71) Anmelder: CLAAS Selbstfahrende Erntemaschinen GmbH, 33428 Harsewinkel (DE)
(72) Erfinder: Schulenburg, Robert, 44319 Dortmund (DE); Witte, Johann, 58730 Fröndenberg (DE); Neitemeier, Dennis, 59510 Lippetal (DE); Marbach, Ralf, 33775 Versmold (DE)
(74) Vertreter: CLAAS Gruppe

(57) **Zusammenfassung**

Die vorliegende Erfindung betrifft eine landwirtschaftliche Erntemaschine (1) mit einer optischen Messeinrichtung (17) zum spektralen Vermessen einer Erntegutprobe. Die optische Messvorrichtung (17) umfasst einen integrierenden Hohlraum (26), eine Lichtquelle (27) und einen Sensor (28), der dazu vorgesehen und eingerichtet ist, Licht aus dem integrierenden Hohlraum (26) zu empfangen. Der integrierende Hohlraum (26) umfasst eine optische Öffnung (18). Mittels des Sensors (28) ist eine außerhalb des integrierenden Hohlraums (26) befindliche Erntegutprobe zu vermessen, um einen Anteil von zumindest einem Inhaltsstoff der Erntegutprobe zu bestimmen. Die Erntemaschine (1) ist dadurch gekennzeichnet, dass die optische Messeinrichtung (17) einen optischen Sensor (32) zur Bestimmung einer Verschmutzung der optischen Öffnung (18) umfasst, wobei der optische Sensor (32) dazu vorgesehen und eingerichtet ist, von der Lichtquelle (27) der optischen Messeinrichtung (17) abgegebenes Licht aus dem integrierenden Hohlraum (26) zu empfangen, die optische Öffnung (18) zu vermessen und die Verschmutzung der optischen Öffnung (18) zu bestimmen.

## Beschreibung

Die vorliegende Anmeldung betrifft eine landwirtschaftliche Erntemaschine mit einer optischen Messeinrichtung zum spektralen Vermessen einer Erntegutprobe gemäß dem Oberbegriff des unabhängigen Patentanspruchs 1.

Aus der DE 10 2020 122 041 A1 ist eine landwirtschaftliche Erntemaschine mit einer optischen Messeinrichtung zum spektralen Vermessen einer Erntegutprobe bekannt. Bei einer solchen optischen Messeinrichtung wird die Erntegutprobe in einer Auswurfvorrichtung an einer optischen Öffnung der optischen Messeinrichtung entlanggeführt. Beim Passieren der optischen Öffnung wird die Erntegutprobe mittels einer Lichtquelle und einem Sensor im Zusammenspiel mit einem integrierenden Hohlraum vermessen, um Inhaltsstoffe der Erntegutprobe zu bestimmen.

Nachteilig bei einer solchen optischen Messeinrichtung ist, dass die optische Öffnung, entlang welcher die Erntegutprobe zwecks Vermessung und Bestimmung von Inhaltsstoffen strömt, durch die Erntegutprobe regelmäßig verschmutzt wird. Insbesondere bei einem von der Erntemaschine verarbeiteten Erntegut mit einem hohen Feuchtigkeitsgehalt kann sich leicht ein Schmutzfilm auf der optischen Öffnung bilden. Wenn sich die Erntemaschine nicht im Betrieb befindet und einer längeren Stillstandzeit unterliegt, kann ein solcher Schmutzfilm an der optischen Öffnung anhaften und bei einer erneuten Inbetriebnahme nicht mehr von dem an der optischen Öffnung vorbeiströmenden Erntegut selbst entfernt werden. Die von der optischen Messeinrichtung vorgenommene Vermessung und Bestimmung kann in einem solchen Fall fehlerbehaftet erfolgen und ist nicht mehr belastbar. Ein Bediener der Erntemaschine muss daher regelmäßig die optische Messeinrichtung, insbesondere die optische Öffnung, inspizieren und feststellen, ob eine Reinigung der optischen Öffnung erforderlich ist. Ein solcher Prozess sorgt für regelmäßige Stillstandzeiten der Erntemaschine, was betriebswirtschaftliche Nachteile mit sich bringt, und wird von dem Bediener als aufwändig und ermüdend empfunden und daher oftmals nicht in der erforderlichen Regelmäßigkeit durchgeführt.

Ausgehend von dem vorstehend genannten Stand der Technik ist es demnach die Aufgabe der vorliegenden Erfindung, die beschriebenen Nachteile des Standes der Technik auszuräumen und insbesondere eine landwirtschaftliche Erntemaschine mit einer optischen Messeinrichtung anzugeben, welche eine Detektion von Verschmutzungen auf einer optischen Öffnung der optischen Messeinrichtung erlaubt.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Erntemaschine Gegenstand der entsprechenden abhängigen Patentansprüche 2 bis 15 sind.

Demnach betrifft die vorliegende Erfindung eine landwirtschaftliche Erntemaschine, insbesondere selbstfahrende landwirtschaftliche Erntemaschine, mit einer optischen Messeinrichtung zum spektralen Vermessen einer Erntegutprobe. Die optische Messvorrichtung umfasst einen integrierenden Hohlraum, der ein diffus reflektierendes Inneres aufweist, um Licht, in dem integrierenden Hohlraum diffus zu machen, eine Lichtquelle, die dazu vorgesehen und eingerichtet ist, Licht eines vorbestimmten Wellenlängenbereichs in den integrierenden Hohlraum abzugeben, und einen Sensor, der dazu vorgesehen und eingerichtet ist, Licht aus dem integrierenden Hohlraum zu empfangen. Der integrierende Hohlraum umfasst eine optische Öffnung, wobei die optische Messeinrichtung dazu vorgesehen und eingerichtet ist, mittels des Sensors, eine außerhalb des integrierenden Hohlraums unmittelbar vor der optischen Öffnung befindliche Erntegutprobe zu vermessen und Daten an eine Steuereinrichtung der Erntemaschine auszugeben, um einen Anteil von zumindest einem Inhaltsstoff, bevorzugt Feuchtigkeit, Protein, Lipid oder Kohlenhydrat, der Erntegutprobe zu bestimmen. Die landwirtschaftliche Erntemaschine ist dadurch gekennzeichnet, dass die optische Messeinrichtung einen optischen Sensor zur Bestimmung einer Verschmutzung der optischen Öffnung umfasst, wobei der optische Sensor dazu vorgesehen und eingerichtet ist, von der Lichtquelle der optischen Messeinrichtung abgegebenes Licht aus dem integrierenden Hohlraum zu empfangen, die optische Öffnung zu vermessen und Daten an die Steuereinrichtung auszugeben, um die Verschmutzung der optischen Öffnung zu bestimmen.

Der vorbestimmte Wellenlängenbereich der Lichtquelle ist bevorzugt im infraroten Bereich. Es versteht sich, dass auch sichtbares Licht und ultraviolettes Licht im vorbestimmten Wellenlängenbereich liegen können. Infrarotes Licht eignet sich insbesondere zur Detektion von Wasser, Proteinen, Lipiden und Kohlenhydraten. Weiterhin versteht sich, dass die Lichtquelle neben dem für die Messung benötigten vorbestimmten Wellenlängenbereich weiteres Licht in den Hohlraum abgeben kann. Der vorbestimmte Wellenlängenbereich im Sinne dieser Erfindung ist der für die Vermessung der Probe genutzte Bereich. Zur Detektion von Wasser kann bspw. der Wellenlängenbereich zwischen 960nm und 980nm im vorbestimmten Wellenlängenbereich liegen. Der Sensor ist zumindest in einem Teilbereich des vorbestimmten Spektrums Lichtempfindlich. Weiterhin ist der der Sensor bevorzugt außerhalb des vorbestimmten Spektrums unempfindlich. Durch die Unempfindlichkeit außerhalb des vorbestimmten Spektrums wird die Messung durch Licht außerhalb des vorbestimmten Spektrums nicht verfälscht.

Durch die erfindungsgemäße Ausgestaltung der optischen Messeinrichtung mit einem optischen Sensor, welcher ebenfalls das von der Lichtquelle in den integrierenden Hohlraum abgegebenen Licht empfangen kann, ist es möglich neben der Bestimmung von Inhaltsstoffen der Erntegutprobe gleichzeitig festzustellen, ob die für die Vermessung wesentliche optische Öffnung verschmutzt ist. Diese Information kann dann auf verschiedene Weisen genutzt werden, um die Vermessung der Erntegutprobe und Bestimmung der Inhaltsstoffe stets sicherzustellen und den für den Bediener der Erntemaschine erforderlichen Aufwand zur Reinigung der optischen Messeinrichtung bzw. optischen Öffnung gering zu halten.

Gemäß einer vorteilhaften Weiterbildung der Erfindung ist vorgesehen, dass der optische Sensor als zumindest eine Kamera ausgebildet ist, wobei die Kamera derart ausgerichtet ist, dass die optische Öffnung im Sichtbereich der Kamera liegt.

Die Ausgestaltung des optischen Sensors als Kamera stellt eine besonders einfache, gleichzeitig erprobte, und kostengünstige technische Lösung dar die Verschmutzung der optischen Öffnung zuverlässig zu detektieren. Im Übrigen bedarf es zur Auswertung der von der Kamera aufgenommenen Bilddaten der optischen Öffnung zwecks Bestimmung der Verschmutzung keiner übermäßigen Rechenleistung der Steuereinrichtung. Hierdurch können die Komplexität und die Kosten für die Architektur der Steuereinrichtung geringgehalten werden können.

Gemäß einer vorteilhaften Weiterbildung der Erfindung ist vorgesehen, dass die Steuereinrichtung dazu vorgesehen und eingerichtet ist, aus den von dem optischen Sensor ausgegebenen Daten ein Schmutzsignal zu ermitteln und basierend auf dem Schmutzsignal eine Reinigungseinrichtung zur Beseitigung der Verschmutzung der optischen Öffnung zu aktivieren, einen Bediener auf eine erforderliche manuelle Beseitigung der Verschmutzung der optischen Öffnung hinzuweisen, und/oder die Bestimmung eines Anteils von zumindest einem Inhaltsstoff der Erntegutprobe anzupassen.

Gemäß einer vorteilhaften Weiterbildung der Erfindung ist vorgesehen, dass die Steuereinrichtung dazu vorgesehen und eingerichtet ist, das ermittelte Schmutzsignal mit einem definierten Schwellwert für das Schmutzsignal zu vergleichen und abhängig vom Vergleichsergebnis entweder einerseits, vorzugsweise bei einem Überschreiten des definierten Schwellwerts, die Reinigungseinrichtung zu aktivieren und/oder den Bediener auf die erforderliche manuelle Beseitigung der Verschmutzung hinzuweisen oder andererseits, vorzugsweise bei einem Unterschreiten des definierten Schwellwerts, die Bestimmung eines Anteils von zumindest einem Inhaltsstoff der Erntegutprobe basierend auf dem Schmutzsignal anzupassen.

Durch die Ermittlung eines Schmutzsignals wird es möglich den Verschmutzungsgrad der optischen Öffnung zu erfassen und zu bewerten sowie abhängig vom erfassten Verschmutzungsgrad verschiedene Maßnahmen auszulösen. Sofern der Verschmutzungsgrad nur sehr gering ist, kann beispielsweise mittels der Steuereinrichtung die Verschmutzung aus den Messwerten des Sensors herausgerechnet werden, wodurch die Bestimmung des Anteils von Inhaltsstoffen der Erntegutprobe angepasst wird. Sofern der Verschmutzungsgrad jedoch zu hoch ist, kann eine manuelle Reinigung durch den Bediener erforderlich sein und/oder, sofern der Erntemaschine eine Reinigungseinrichtung zur Verfügung steht, eine automatische Reinigung ausgelöst werden.

Gemäß einer vorteilhaften Weiterbildung der Erfindung ist vorgesehen, dass die Reinigungseinrichtung als Fluidstrahl-Reinigungseinrichtung, vorzugsweise Sprühdüse, ausgebildet ist, wobei die Fluidstrahl-Reinigungseinrichtung derart angeordnet und ausgerichtet ist, dass eine Öffnung der Fluidstrahl-Reinigungseinrichtung, mittels der ein Fluidstrahl zur Beseitigung der Verschmutzung der optischen Öffnung applizierbar ist, in Richtung der optischen Öffnung weist.

Die Ausgestaltung einer Reinigungseinrichtung als Fluidstrahl-Reinigungseinrichtung sorgt für eine besonders einfache Integration der Reinigungseinrichtung in die Erntemaschine und erlaubt gleichzeitig durch das zielgerichtete Auftreffen des Fluidstrahls auf die optische Öffnung eine besonders effiziente Reinigung, ohne den Betrieb der Erntemaschine längerfristig unterbrechen zu müssen.

Gemäß einer vorteilhaften Weiterbildung der Erfindung ist vorgesehen, dass die optische Öffnung aus Mineralglas, vorzugsweise aus Saphirglas, ausgebildet ist.

Insbesondere Saphirglas aus dem Bereich der Mineralgläser zeichnet sich durch eine hohe Kratzfestigkeit aus. Eine hohe Kratzfestigkeit ist vorteilhaft, wenn die Probe in direkten Kontakt mit dem Glas kommt und dieses zerkratzen könnte. Weiterhin besitzt Saphirglas gute Transmissionseigenschaften, insbesondere auch im infraroten Wellenlängenbereich. Ferner lässt sich eine aus Mineralglas ausgebildete optische Öffnung gut von Verschmutzungen befreien.

Gemäß einer vorteilhaften Weiterbildung der Erfindung ist vorgesehen, dass die Lichtquelle dazu vorgesehen und eingerichtet ist, ein breitbandiges Lichtspektrum auszusenden, wobei, vorzugsweise, die Lichtquelle als Halogenlampe ausgebildet ist.

Ein breitbandiges Lichtspektrum, insbesondere das einer Halogenlampe, ermöglicht grundsätzlich die differenzierte Vermessung der Probe mit nur einer Lichtquelle.

Gemäß einer vorteilhaften Weiterbildung der Erfindung ist vorgesehen, dass die optische Messeinrichtung mehrere, vorzugsweise zwei, Lichtquellen umfasst, die dazu vorgesehen und eingerichtet sind, jeweils Licht abzugeben, deren Wellenlängenbereich einander entspricht.

Die Verwendung mehrerer, vorzugsweise zweier, Lichtquellen, die jeweils Licht mit einem einander entsprechenden Wellenlängenbereich abgeben, sorgt für eine Steigerung der Lichtintensität bei gleichbleibendem Wärmeeintrag in den integrierenden Hohlraum. Die Vermessung der Erntegutprobe zwecks Bestimmung von Inhaltsstoffen und/oder die Detektion einer Verschmutzung mittels des optischen Sensors kann hierdurch verbessert werden. Weiterhin stellt die Verwendung von weiteren Lichtquellen sicher, dass bei einem Ausfall einer Lichtquelle ein Betrieb der optischen Messeinrichtung weiterhin erfolgen kann und ein Austausch bzw. eine Wartung der ausgefallenen Lichtquelle erst dann erfolgen muss, wenn sich die Erntemaschine in einer planmäßigen Stillstandzeit befindet.

Gemäß einer vorteilhaften Weiterbildung der Erfindung ist vorgesehen, dass das diffus reflektierende Innere des integrierenden Hohlraums in dem vorbestimmten Wellenlängenbereich eine Reflektanz von mindestens 99% umfasst, wobei, vorzugsweise, die Oberfläche im Inneren des integrierenden Hohlraums eine Beschichtung mit expandiertem Polytetrafluorethylen, ePTFE, umfasst.

Eine hohe Reflektanz verbessert die Dynamik der Sensorwerte und ermöglicht die Nutzung einer schwächeren Lichtquelle. Insbesondere ePTFE sorgt dabei aufgrund der Polymerstruktur für eine besonders gute Reflektanz bzw. Ausleuchtung der Erntegutprobe, ist besonders unkompliziert auf eine Oberfläche im Inneren des Hohlraums zu applizieren und sehr kostengünstig.

Gemäß einer vorteilhaften Weiterbildung der Erfindung ist vorgesehen, dass die optische Messeinrichtung eine Sensoreinrichtung zur Bestimmung einer Strömungsgeschwindigkeit der außerhalb des integrierenden Hohlraums unmittelbar vor der optischen Öffnung befindlichen Erntegutprobe umfasst, wobei die Sensoreinrichtung eine Lichtquelle, vorzugsweise eine Leuchtdiode, LED, oder eine Laserdiode, umfasst, die dazu vorgesehen und eingerichtet ist, Licht eines vorbestimmten Wellenlängenbereichs in den integrierenden Hohlraum abzugeben, wobei die Sensoreinrichtung einen optischen Sensor, vorzugsweise eine Kamera, umfasst, der dazu vorgesehen und eingerichtet ist, von der Lichtquelle der Sensoreinrichtung abgegebenes Licht aus dem integrierenden Hohlraum zu empfangen, die außerhalb des integrierenden Hohlraums unmittelbar vor der optischen Öffnung befindliche Erntegutprobe zu vermessen und Daten an die Steuereinrichtung auszugeben, um die Strömungsgeschwindigkeit der Erntegutprobe zu bestimmen.

Die Integration einer Sensoreinrichtung zur Erfassung der Strömungsgeschwindigkeit der Erntegutprobe sorgt dafür, dass der Funktionsumfang der optischen Messeinrichtung erweitert wird, gleichzeitig Bauraum in der Erntemaschine eingespart werden kann. Die Sensoreinrichtung kann in die optische Messeinrichtung integriert werden, da die optische Messeinrichtung aufgrund ihrer Ausgestaltung ausreichend Bauraum zur Verfügung stellt. Ein Sensor zur Erfassung der Geschwindigkeit der Erntegutprobe muss demnach nicht an anderer Stelle im Gutfluss der Erntemaschine aufwendig angeordnet und integriert werden.

Gemäß einer vorteilhaften Weiterbildung der Erfindung ist vorgesehen, dass die optische Messeinrichtung eine Sensoreinrichtung zur Bestimmung einer Chlorophyll-Bande der außerhalb des integrierenden Hohlraums unmittelbar vor der optischen Öffnung befindlichen Erntegutprobe umfasst, wobei die Sensoreinrichtung eine Lichtquelle, vorzugsweise eine Leuchtdiode, LED, umfasst, die dazu vorgesehen und eingerichtet ist, Licht eines vorbestimmten Wellenlängenbereichs in den integrierenden Hohlraum abzugeben, wobei die Sensoreinrichtung einen als Photodiode ausgebildeten optischen Sensor umfasst, der dazu vorgesehen und eingerichtet ist, von der Lichtquelle der Sensoreinrichtung abgegebenes Licht aus dem integrierenden Hohlraum zu empfangen, die außerhalb des integrierenden Hohlraums unmittelbar vor der optischen Öffnung befindliche Erntegutprobe zu vermessen und Daten an die Steuereinrichtung auszugeben, um die Chlorophyll-Bande der Erntegutprobe zu bestimmen.

Die Integration einer Sensoreinrichtung zur Erfassung der Chlorophyll-Bande der Erntegutprobe sorgt dafür, dass weitere wertvolle Ernteguteigenschaften ermittelt und mit den mittels des Sensors der optischen Messeinrichtung bestimmten Inhaltsstoffen in Verbindung gebracht werden können. Die Korrelation der Messdaten erlaubt es beispielsweise die Gesundheit der Erntegutpflanzen, die sich in der Erntegutprobe wiederfinden, zu bestimmen. Weiterhin können die Messdaten zur Chlorophyll-Bande auch zur Verbesserung der Messung von Inhaltsstoffen der Erntegutprobe verwendet werden, indem anhand dieser Messdaten ein Kalibrierdatensatz für die Messung von Inhaltsstoffen definiert wird.

Gemäß einer vorteilhaften Weiterbildung der Erfindung ist vorgesehen, dass zumindest auf dem direkten Weg zwischen der Lichtquelle der optischen Messeinrichtung und der optischen Öffnung eine Lichtsperre angeordnet ist, welche verhindert, dass Licht von der Lichtquelle der optischen Messeinrichtung direkt zur optischen Öffnung gelangt.

Durch die Lichtsperre wird sichergestellt, dass nur diffus innerhalb des Hohlraums gestreutes Licht zur Probe gelangt. Die Oberfläche der Lichtsperre ist bevorzugt ebenso diffus reflektierend wie das Innere des Hohlraums. Die Probe wird durch die erzwungene diffuse Streuung besonders gleichmäßig beleuchtet.

Gemäß einer vorteilhaften Weiterbildung der Erfindung ist vorgesehen, dass die optische Messeinrichtung eine erste Abdeckung umfasst, wobei die erste Abdeckung zwischen die Lichtquelle der optischen Messeinrichtung und den integrierenden Hohlraum geschoben werden kann, sodass die erste Abdeckung verhindert, dass Licht der Lichtquelle den integrierenden Hohlraum erreicht.

Die erste Abdeckung ermöglicht eine lichtdichte Trennung zwischen der Lichtquelle und dem integrierenden Hohlraum. Wenn die erste Abdeckung die Lichtquelle vom Hohlraum trennt, ist kann ein Dunkelsignal durch den Sensor aufgenommen werden und damit ein Dunkelabgleich durchgeführt werden. Im Dunkelsignal wird durch die optische Öffnung einfallendes Streulicht und der Dunkelstrom des Sensors aufgezeichnet.

Gemäß einer vorteilhaften Weiterbildung der Erfindung ist vorgesehen, dass die optische Messeinrichtung eine zweite Abdeckung umfasst, wobei die zweite Abdeckung dazu vorgesehen und eingerichtet ist, die optische Öffnung temporär so zu verschließen, dass die zweite Abdeckung verhindert, dass Licht durch die optische Öffnung in den integrierenden Hohlraum eindringen kann.

Wenn die zweite Abdeckung die optische Öffnung verschließt, kann ein Weißsignal durch den Sensor aufgenommen werden und damit ein Weißabgleich durchgeführt werden. Im Weißsignal wird das von dem Hohlraum diffus gestreute Licht der Lichtquelle aufgezeichnet.

Insbesondere ist vorgesehen, dass die erste und/oder die zweite Abdeckung diffus reflektierend sind.

Durch die diffuse Reflektion ist das Innere des Hohlraums komplett diffus reflektierend, auch wenn die Abdeckung vor die Lichtquelle bzw. vor die optische Öffnung bewegt wird. Dadurch werden Lichtverluste sowie auch die Aufwärmung der mechanischen Komponenten minimiert.

Die Abdeckungen können sich innerhalb oder außerhalb des integrierenden Hohlraums befinden und mechanisch zwischen Lichtquelle und Hohlraum bzw. vor die optische Öffnung geschoben werden. Bevorzugt befindet sich die Abdeckungen außerhalb des Hohlraums, dadurch wird die innere Geometrie des Hohlraums nicht durch die Abdeckungen verändert.

Gemäß einer vorteilhaften Weiterbildung der Erfindung ist vorgesehen, dass die optische Messeinrichtung zumindest einen Aktuator zur Verlagerung der ersten und/oder zweiten Abdeckung umfasst, wobei die Steuereinrichtung dazu vorgesehen und eingerichtet ist, ein Referenzierungssignal zu erzeugen und basierend auf dem Referenzierungssignal den zumindest einen Aktuator zur Verlagerung der ersten und/oder zweiten Abdeckung anzusteuern.

Durch die Nutzung eines Aktuators, welcher basierend auf einem von der Steuereinrichtung erzeugten Referenzierungssignal die Abdeckungen verlagert, kann der Referenzierungsvorgang der optischen Messeinrichtung, welcher zur Sicherstellung von belastbaren Messdaten regelmäßig erforderlich ist, automatisiert werden.

Gemäß einer vorteilhaften Weiterbildung der Erfindung ist vorgesehen, dass die landwirtschaftliche Erntemaschine eine Auswurfvorrichtung zum Überladen von verarbeitetem Erntegut umfasst, wobei die optische Messeinrichtung an der Auswurfvorrichtung angeordnet ist.

Eine landwirtschaftliche Erntemaschine kann beispielsweise als Mähdrescher oder Feldhäcksler ausgebildet sein. Bei einem Mähdrescher wird die optische Messeinrichtung zur Vermessung der ausgedroschenen Körner verwendet. Dazu wird die optische Messeinrichtung an einer als Kornelevator und/oder als Abtankrohr ausgebildeten Auswurfvorrichtung befestigt. Die Körner werden an der optischen Öffnung der optischen Messeinrichtung vorbeibewegt und dabei vermessen. Bei einem Feldhäcksler wird die optische Messeinrichtung zur Vermessung des zerkleinerten Erntegutes eingesetzt. Dazu wird die optische Messeinrichtung an einer als Auswurfkrümmer ausgebildeten Auswurfvorrichtung befestigt und das durch den Auswurfkrümmer bewegte Erntegut an der optischen Öffnung der optischen Messeinrichtung vorbeibewegt und dabei vermessen.

Die vorliegende Erfindung wird nachstehend anhand der in den Figuren abgebildeten Ausführungsformen näher beschrieben.

Es zeigen:
- FIG. 1:: eine schematische und exemplarische Darstellung einer erfindungsgemäßen landwirtschaftlichen Erntemaschine in Gestalt eines Feldhäckslers mit einer erfindungsgemäßen optischen Messeinrichtung; und
- Fig. 2: eine schematische und exemplarische Darstellung der erfindungsgemäßen optischen Messeinrichtung gemäß FIG. 1.

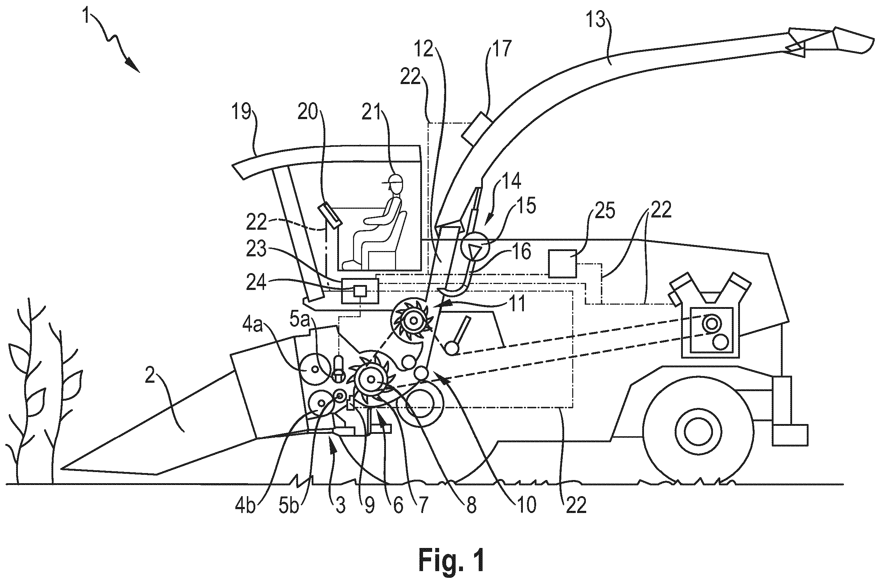

FIG. 1 zeigt eine schematische und exemplarische Darstellung einer erfindungsgemäßen landwirtschaftlichen Erntemaschine 1 in Gestalt eines Feldhäckslers. Der Feldhäcksler 1 umfasst ein Vorsatzgerät 2 zum Ernten von Erntegut. Das Vorsatzgerät 2 kann unter anderem als sogenanntes Maisgebiss oder als Maispflücker ausgebildet sein. Für das Ernten von Gras kann das Vorsatzgerät 2 als ein Mähwerk ausgeführt sein.

Das von dem Vorsatzgerät 2 aufgenommene Erntegut wird einer Einzugsvorrichtung 3 zugeführt. Die Einzugsvorrichtung 3 umfasst zumindest ein erstes Paar Walzen 4a, 4b und ein zweites Paar Walzen 5a, 5b, die an einem Rahmen oder einem Gehäuse angeordnet sind. Die zumindest zwei Walzenpaare 4a, 4b und 5a, 5b dienen dem Einzug und Vorpressen des Erntegutes.

Der Einzugsvorrichtung 3 ist eine Häckselvorrichtung 6 nachgeordnet. Die Häckselvorrichtung 6 umfasst eine mit Häckselmessern 7 bestückte, rotierend angetriebene Häckseltrommel 8. Zum Zerkleinern des in Form einer verdichteten Erntegutmatte zugeführten Erntegutes wirken die mit der Häckseltrommel 8 rotierenden Häckselmesser 7 mit einer ortsfest angeordneten Gegenschneide 9 der Häckselvorrichtung 6 zusammen.

Das aus der Häckselvorrichtung 6 austretende zerkleinerte Erntegut kann einer optional vorgesehenen Nachbearbeitungsvorrichtung 10 zugeführt werden. Die Nachbearbeitungsvorrichtung 10, auch als Konditioniereinrichtung oder Corncracker bezeichnet, dient dem Aufschließen von Körnern, um die Verwertbarkeit bzw. Energieausbeute bei einem Einsatz als Futtermittel bzw. in einer Biogasanlage zu erhöhen.

Von der Häckselvorrichtung 6 bzw. der optionalen Nachbearbeitungsvorrichtung 10 gelangt das zerkleinerte Erntegut zu einer Nachbeschleunigungsvorrichtung 11, welche das Erntegut durch einen Förderschacht 12 und eine sich daran anschließende als Auswurfkrümmer ausgebildete Auswurfvorrichtung 13 an ein benachbart zu dem Feldhäcksler 1 fahrendes - in den FIGs. nicht dargestelltes - Transportfahrzeug überlädt. Im Bereich der Nachbeschleunigungsvorrichtung 10 ist eine Siliermitteldosiervorrichtung 14 angeordnet, die mittels einer Förderpumpe 15 mit veränderlichem Fördervolumen eine Flüssigkeit in den Förderschacht 12 einbringt. Hierzu ist ein in dem Förderschacht 12 endender, sich in Stromrichtung des Ernteguts öffnender Injektor 16 vorgesehen, wodurch die Flüssigkeit in fein verspritzter Form auf das vorbeiströmende Erntegut appliziert wird. An der Auswurfvorrichtung 13 ist zumindest eine erfindungsgemäße optische Messeinrichtung 17 angeordnet, welche zum spektralen Vermessen einer Erntegutprobe aus dem Erntegut eingerichtet ist und nachfolgend noch im Detail beschrieben wird. Das Erntegut bzw. die Erntegutprobe wird in der Auswurfvorrichtung 13 an einer optischen Öffnung 18 der optischen Messeinrichtung 17 vorbeigeführt. Die optische Messeinrichtung 17 vermisst das Erntegut bzw. die Erntegutprobe bei mehreren NIR-Frequenzen und bestimmt Inhaltsstoffe des Erntegutes bzw. der Erntegutprobe wie Wasser, Lipide, Kohlenhydrate oder Proteine.

Der Feldhäcksler 1 weist eine Kabine 19 auf, in der eine Ein-/ Ausgabevorrichtung 20 vorgesehen ist, welche einem Bediener 21 des Feldhäckslers 1 zur Verfügung steht, um beispielsweise Betriebsparameter ein- und verstellen zu können und um den Bediener 21 über aktuelle Betriebs- bzw. Erntebedingungen zu informieren. Die Ein-/Ausgabevorrichtung 20 steht durch ein Bussystem 22 mit einem Fahrerassistenzsystem 23 des Feldhäckslers 1 in Verbindung. Das Bussystem 22 verbindet darüber hinaus die optische Messeinrichtung 17 an der Auswurfvorrichtung 13 mit dem Fahrerassistenzsystem 23. Die von der optischen Messeinrichtung 17 ermittelten Messwerte können über das Bussystem 22 an die Ein-/Ausgabevorrichtung 20 übertragen und dort dem Bediener 21 angezeigt werden. Weiterhin kann der Bediener 21 die optische Messeinrichtung 17 über die Ein-/Ausgabevorrichtung 20 konfigurieren. Außerdem umfasst das Fahrerassistenzsystem 23 eine Steuereinrichtung 24, welche dazu vorgesehen und eingerichtet ist, die von der optischen Messeinrichtung 17 übermittelten Messwerte bzw. Daten zur Bestimmung der Inhaltsstoffe, weiterer Erntegutparameter und/oder Betriebsparameter zu verarbeiten und entsprechende Signale zwecks Anzeige über die Ein-/Ausgabevorrichtung 20 und/oder Ansteuerung von Aggregaten, beispielsweise den eingangs genannten Aggregaten, des Feldhäckslers 1 zu erzeugen.

Der Feldhäcksler 1 kann weiterhin eine Kommunikationseinheit 25 umfassen, welche an das Bussystem 22 angeschlossen ist. Die Kommunikationseinheit 25 ist zum Übertragen von Busdaten an externe Kommunikationspartner und zum Übertragen von empfangen Daten über das Bussystem 22 eingerichtet. Die von der optischen Messeinrichtung 17 ermittelten Messwerte können über das Bussystem 22 und die Kommunikationseinheit 25 an eine externe Stelle, bspw. ein Farm-Managementsystem, übertragen werden. Weiterhin können von einer externen Stelle gesendete Konfigurationsdaten von der Kommunikationseinheit 25 empfangen und über das Bussystem 22 an die optische Messeinheit 17 übertragen werden.

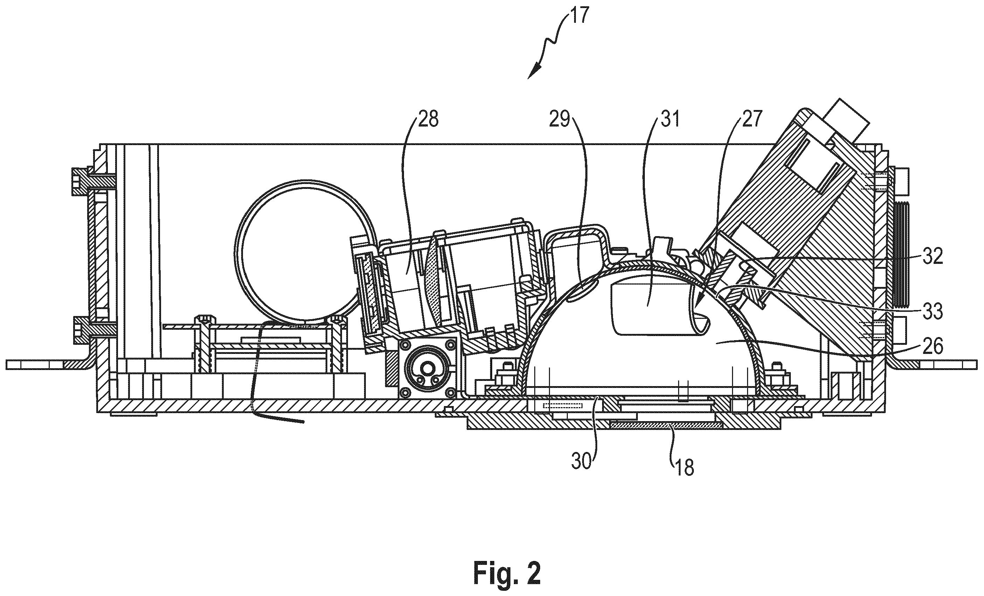

Die optische Messeinrichtung 17 ist schematisch und exemplarisch in FIG. 2 dargestellt. Die Messeinrichtung 17 umfasst einen integrierenden Hohlraum 26. Das Innere des Hohlraums 26 ist diffus reflektierend, wobei das diffus reflektierende Innere des Hohlraums 26, vorzugsweise, eine Reflektanz von mindestens 99% umfasst. Um eine solch hohe Reflektanz zu erzielen kann die Oberfläche im Inneren des Hohlraums 26 eine Beschichtung mit oder aus expandiertem Polytetrafluorethylen, ePTFE, umfassen. Eine als breitbandige Halogenlampe ausgebildete Lichtquelle 27 befindet sich außerhalb des Hohlraums 26 und gibt Licht einer vorbestimmten Wellenlänge in den Hohlraum 26 ab. Das Licht wird im Inneren des Hohlraums 26 diffus gestreut. Durch die optische Öffnung 18 trifft ein Teil des Lichtes auf die außerhalb des Hohlraums 26 unmittelbar vor der optischen Öffnung 18 befindliche Erntegutprobe. Das von der Erntegutprobe reflektierte Licht wird wieder im Hohlraum 26 diffus gestreut und gelangt zu einem Sensor 28. Der Sensor 28 ist dazu vorgesehen und eingerichtet, die außerhalb des integrierenden Hohlraums 26 unmittelbar vor der optischen Öffnung 18 befindliche Erntegutprobe zu vermessen und entsprechende Messwerte bzw. Daten an die Steuereinrichtung 24 über das Bussystem 22 auszugeben. Die Steuereinrichtung 24 verarbeitet diese Messwerte bzw. Daten des Sensors 28 dann dahingehend, dass ein Anteil von zumindest einem der genannten Inhaltsstoffe der Erntegutprobe bestimmt wird.

Die Lichtquelle 27 und der Sensor 28 befinden sich außerhalb des integrierenden Hohlraums 26. Die Lichtquelle 27 ist über eine - in den FIGs. nicht dargestellte - Öffnung zur Abgabe von Licht mit dem integrierenden Hohlraum 26 gekoppelt. Der Sensor 28 ist über eine Öffnung 29 zum Empfang von Licht mit dem integrierenden Hohlraum 26 gekoppelt. Der Hohlraum 26 ist als Halbkugel und die optische Öffnung 18 ist in der Schnittfläche 30 der Halbkugel ausgebildet. Eine Lichtsperre 31 ist als Wand zwischen der Lichtquelle 27 und dem Sensor 28 vorhanden. Die Lichtsperre 31 verhindert einerseits, dass Licht von der Lichtquelle 27 direkt zur optischen Öffnung 18 gelangt, und andererseits, dass Licht von der Lichtquelle 27 direkt zum Sensor 28 gelangt. Die optische Messeinrichtung 17 kann weitere Lichtsperren 31 umfassen, die verhindern, dass Licht von der optischen Öffnung 18 direkt zum Sensor 28 gelangt. Neben der Lichtquelle 27 kann die optische Messeinrichtung 17 weitere, bevorzugt eine weitere, als breitbandige Halogenlampe ausgebildete Lichtquelle 27 umfassen. Sofern eine weiter Lichtquelle 27 vorgesehen ist, gibt diese Lichtquelle Licht in einem Wellenlängenbereich ab, welcher dem Wellenlängenbereich des von der Lichtquelle 27 abgegebenen Lichtes entspricht. Die optische Öffnung 18 besteht aus Saphirglas. Das Saphirglas bildet gleichzeitig einen Teil der Wandung des Auswurfvorrichtung 13.

Die optische Messeinrichtung 17 kann weiterhin für eine Referenzierung eine oder mehrere Abdeckungen umfassen. Eine erste Abdeckung befindet sich wahlweise außerhalb oder innerhalb des Hohlraums 26 und kann so vor die optische Öffnung 18 bewegt werden, dass kein Licht die optische Öffnung 18 durchqueren kann. Wenn diese erste Abdeckung die optische Öffnung 18 lichtdicht verschließt, kann ein Weißsignal bzw. eine Weißreferenz aufgenommen werden. Eine weitere zweite Abdeckung kann so in den Hohlraum 26 bewegt werden, dass diese Abdeckung verhindert, dass Licht der Lichtquelle 27 den Hohlraum 26 erreicht, wodurch ein Dunkelsignal bzw. eine Dunkelreferenz aufgenommen werden kann. Die erste Abdeckung und/oder die zweite Abdeckung sind bevorzugt diffus reflektierend ausgebildet. Es versteht sich, dass die zweite Abdeckung auch wie die erste Abdeckung bewegt werden kann. Zur Bewegung der Abdeckungen umfasst die optische Messvorrichtung 17 einen Aktuator. Die Steuereinrichtung 24 ist dazu vorgesehen und eingerichtet, ein Referenzierungssignal zu erzeugen und basierend auf dem Referenzierungssignal bzw. mittels Übermittlung des Referenzierungssignals über das Bussystem 22 an die optische Messeinrichtung 17 den Aktuator zur Verlagerung der ersten und/oder zweiten Abdeckung anzusteuern.

Neben dem genannten Sensor 28 zum spektralen Vermessen der Erntegutprobe kann die optische Messeinrichtung 17 weitere Sensoreinrichtungen bzw. Sensoren zum Bestimmen weiterer Erntegutparameter der Erntegutprobe und/oder Betriebsparameter der optischen Messeinrichtung 17 umfassen.

Einen weiteren solchen Sensor stellt ein optischer Sensor 32 dar. Der optische Sensor 32 befindet sich, wie auch der Sensor 28, außerhalb des Hohlraums 26 und ist über eine Öffnung 33 zur Abgabe und zum Empfang von Licht mit dem Hohlraum 26 gekoppelt. Bei dem optischen Sensor 32 handelt es sich grundsätzlich um ein elektronisches Bauelement, welches dazu vorgesehen und eingerichtet ist, optische Informationen, beispielsweise Licht bzw. reflektiertes Licht, in elektrisch auswertbare Signale umzuwandeln. Hier ist der optische Sensor 32 als Kamera ausgebildet. Die Kamera 32 kann dabei ein oder mehrere zeitlich aufeinanderfolgende Bilder bzw. eine Bildserie oder ein Video erfassen. Die Kamera 32 ist dazu vorgesehen und eingerichtet, eine Verschmutzung der optischen Öffnung 18 zu bestimmen, welche durch die Erntegutprobe verursacht wird, die entlang der optischen Öffnung 18 in der Auswurfvorrichtung 13 strömt und dabei vom Sensor 28 vermessen wird. Die Kamera 32 empfängt zwecks Vermessung der optischen Öffnung 18 von der Lichtquelle 27 der optischen Messeinrichtung 17 abgegebenes Licht aus dem integrierenden Hohlraum 26. Die Kamera 32 erzeugt während der Vermessung der optischen Öffnung 28 entsprechende Messwerte bzw. Daten und gibt diese über das Bussystem 22 an die Steuereinrichtung 24 aus. Die Steuereinrichtung 24 verarbeitet diese Messwerte bzw. Daten der Kamera 32 dann dahingehend, eine Verschmutzung der optischen Öffnung 18 zu bestimmen und ein entsprechendes Schmutzsignal zu ermitteln bzw. auszugeben. Bestimmen ist hierbei dahingehend zu verstehen, dass die Steuereinrichtung 24 grundsätzlich anhand der Messwerte bzw. Daten der Kamera 32 ein Vorliegen von Verschmutzung der optischen Öffnung 18 ermittelt und, bedarfsweise, auch einen Verschmutzungsgrad ermitteln kann. Das von der Steuereinrichtung 24 erzeugte Schmutzsignal repräsentiert die entsprechenden Informationen. Die Kamera 32 ist zur Vermessung der optischen Öffnung 18 derart ausgerichtet, dass die optische Öffnung 18 im Sichtbereich der Kamera 32 liegt.

Die Steuereinrichtung 24 kann abhängig vom Schmutzsignal verschiedene Aktionen auslösen. Beispielsweise kann basierend auf dem erzeugten Schmutzsignal eine - in den FIGs. nicht dargestellte - Reinigungseinrichtung zur Beseitigung der Verschmutzung der optischen Öffnung 18 von der Steuereinrichtung 24 aktiviert werden. Auch ist es möglich, dass die Steuereinrichtung 24 basierend auf dem erzeugten Schmutzsignal den Bediener 21 des Feldhäckslers 1 auf eine erforderliche manuelle Beseitigung der Verschmutzung der optischen Öffnung 18 hinweist. Weiterhin ist es möglich, dass die Steuereinrichtung 24 die Bestimmung eines Anteils von Inhaltsstoffen der Erntegutprobe basierend auf dem Schmutzsignal anpasst, mit anderen Worten die Verschmutzung herausrechnet. Um zu entscheiden, welche der Maßnahmen bzw. Aktionen von der Steuereinrichtung 24 initiiert werden sollen, vergleicht die Steuereinrichtung 24 das auf Grundlage der Messwerte bzw. Daten der Kamera 32 ermittelte Schmutzsignal mit einem definierbaren bzw. definierten Schwellwert für das Schmutzsignal. Abhängig vom Vergleichsergebnis werden dann eine oder mehrere der genannten Maßnahmen bzw. Aktionen von der Steuereinrichtung 24 initiiert. Liegt ein Überschreiten des definierten Schwellwerts durch das ermittelte Schmutzsignal vor, so wird mittels der Steuereinrichtung 24 entweder die Reinigungseinrichtung aktiviert und/oder der Bediener 21 auf die erforderliche manuelle Beseitigung der Verschmutzung hingewiesen. Liegt ein Unterschreiten des definierten Schwellwerts durch das ermittelte Schmutzsignal vor, so wird mittels der Steuereinrichtung 24 die Bestimmung eines Anteils von Inhaltsstoffen der Erntegutprobe basierend auf dem Schmutzsignal angepasst, also die Verschmutzung herausgerechnet. Die Reinigungseinrichtung ist dabei als Fluidstrahl-Reinigungseinrichtung, vorzugsweise als Sprühdüse, ausgebildet und derart angeordnet und ausgerichtet, dass eine Öffnung der Fluidstrahl-Reinigungseinrichtung, mittels der ein Fluidstrahl zur Beseitigung der Verschmutzung der optischen Öffnung 18 applizierbar ist, in Richtung der optischen Öffnung 18 weist.

Eine weitere solche Sensoreinrichtung stellt eine - in den FIGs. nicht dargestellte - Sensoreinrichtung zur Bestimmung einer Strömungsgeschwindigkeit dar. Die Sensoreinrichtung ist dazu vorgesehen und eingerichtet, eine Strömungsgeschwindigkeit der außerhalb des integrierenden Hohlraums 26 unmittelbar vor der optischen Öffnung 18 befindlichen Erntegutprobe zu bestimmen. Die Sensoreinrichtung zur Bestimmung einer Strömungsgeschwindigkeit befindet sich, wie auch der Sensor 28, außerhalb des Hohlraums 26 und ist über eine Öffnung zur Abgabe und zum Empfang von Licht mit dem Hohlraum 26 gekoppelt. Die Sensoreinrichtung umfasst eine als Leuchtdiode, LED, oder Laserdiode ausgebildete Lichtquelle, die dazu vorgesehen und eingerichtet ist, Licht eines vorbestimmten Wellenlängenbereichs in den integrierenden Hohlraum 26 abzugeben. Die Sensoreinrichtung umfasst weiterhin einen als Kamera ausgebildeten optischen Sensor, der dazu vorgesehen und eingerichtet ist, von der Lichtquelle der Sensoreinrichtung abgegebenes Licht aus dem integrierenden Hohlraum 26 zu empfangen. Die Kamera erzeugt während der Vermessung der Erntegutprobe entsprechende Messwerte bzw. Daten und gibt diese über das Bussystem 22 an die Steuereinrichtung 24 aus. Die Steuereinrichtung 24 verarbeitet diese Messwerte bzw. Daten der Kamera dann dahingehend, die Strömungsgeschwindigkeit der außerhalb des integrierenden Hohlraums 26 unmittelbar vor der optischen Öffnung 18 befindlichen Erntegutprobe zu bestimmen und ein entsprechendes Signal zu ermitteln bzw. auszugeben.

Eine weitere solche Sensoreinrichtung stellt eine - in den FIGs. ebenfalls nicht dargestellte - Sensoreinrichtung zur Bestimmung einer Chlorophyll-Bande dar. Die Sensoreinrichtung ist dazu vorgesehen und eingerichtet, eine Chlorophyll-Bande der außerhalb des integrierenden Hohlraums 26 unmittelbar vor der optischen Öffnung 18 befindlichen Erntegutprobe zu bestimmen. Die Sensoreinrichtung zur Bestimmung einer Chlorophyll-Bande befindet sich, wie auch der Sensor 28, außerhalb des Hohlraums 26 und ist über eine Öffnung zur Abgabe und zum Empfang von Licht mit dem Hohlraum 26 gekoppelt. Die Sensoreinrichtung umfasst eine als Leuchtdiode, LED, ausgebildete Lichtquelle, die dazu vorgesehen und eingerichtet ist, Licht eines vorbestimmten Wellenlängenbereichs in den integrierenden Hohlraum 26 abzugeben. Die Sensoreinrichtung umfasst weiterhin einen als Photodiode ausgebildeten optischen Sensor umfasst, der dazu vorgesehen und eingerichtet ist, von der Lichtquelle der Sensoreinrichtung abgegebenes Licht aus dem integrierenden Hohlraum 26 zu empfangen. Die Photodiode erzeugt während der Vermessung der Erntegutprobe entsprechende Messwerte bzw. Daten und gibt diese über das Bussystem 22 an die Steuereinrichtung 24 aus. Die Steuereinrichtung 24 verarbeitet diese Messwerte bzw. Daten der Photodiode dann dahingehend, die Chlorophyll-Bande der außerhalb des integrierenden Hohlraums 26 unmittelbar vor der optischen Öffnung 18 befindlichen Erntegutprobe zu bestimmen und ein entsprechendes Signal zu ermitteln bzw. auszugeben.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Erntemaschine bzw. Feldhäcksler | 17 | Optische Messeinrichtung |
| | | 18 | Optische Öffnung |
| 2 | Vorsatzgerät | 19 | Kabine |
| 3 | Einzugsvorrichtung | 20 | Ein-/Ausgabevorrichtung |
| 4a | Walze | 21 | Bediener |
| 4b | Walze | 22 | Bussystem |
| 5a | Walze | 23 | Fahrerassistenzsystem |
| 5b | Walze | 24 | Steuereinrichtung |
| 6 | Häckselvorrichtung | 25 | Kommunikationseinheit |
| 7 | Häckselmesser | 26 | Integrierender Hohlraum |
| 8 | Häckseltrommel | 27 | Lichtquelle |
| 9 | Gegenschneide | 28 | Sensor |
| 10 | Nachbearbeitungsvorrichtung | 29 | Öffnung |
| 11 | Nachbeschleunigungsvorrichtung | 30 | Schnittfläche des integrierenden Hohlraums |
| 12 | Förderschacht | | |
| 13 | Auswurfvorrichtung | 31 | Lichtsperre |
| 14 | Siliermitteldosiervorrichtung | 32 | Optischer Sensor bzw. Kamera |
| 15 | Förderpumpe | 33 | Öffnung |
| 16 | Injektor | | |

## Patentansprüche

1. Landwirtschaftliche Erntemaschine (1), insbesondere selbstfahrende landwirtschaftliche Erntemaschine, mit einer optischen Messeinrichtung (17) zum spektralen Vermessen einer Erntegutprobe, wobei die optische Messvorrichtung (17) Folgendes umfasst:
- einen integrierenden Hohlraum (26), der ein diffus reflektierendes Inneres aufweist, um Licht, in dem integrierenden Hohlraum (26) diffus zu machen;
- eine Lichtquelle (27), die dazu vorgesehen und eingerichtet ist, Licht eines vorbestimmten Wellenlängenbereichs in den integrierenden Hohlraum (26) abzugeben; und
- einen Sensor (28), der dazu vorgesehen und eingerichtet ist, Licht aus dem integrierenden Hohlraum (26) zu empfangen,
wobei der integrierende Hohlraum (26) eine optische Öffnung (18) umfasst, wobei die optische Messeinrichtung (17) dazu vorgesehen und eingerichtet ist, mittels des Sensors (28), eine außerhalb des integrierenden Hohlraums (26) unmittelbar vor der optischen Öffnung (18) befindliche Erntegutprobe zu vermessen und Daten an eine Steuereinrichtung (24) der Erntemaschine (1) auszugeben, um einen Anteil von zumindest einem Inhaltsstoff, bevorzugt Feuchtigkeit, Protein, Lipid oder Kohlenhydrat, der Erntegutprobe zu bestimmen,
**dadurch gekennzeichnet, dass**
die optische Messeinrichtung (17) einen optischen Sensor (32) zur Bestimmung einer Verschmutzung der optischen Öffnung (18) umfasst, wobei der optische Sensor (32) dazu vorgesehen und eingerichtet ist, von der Lichtquelle (27) der optischen Messeinrichtung (17) abgegebenes Licht aus dem integrierenden Hohlraum (26) zu empfangen, die optische Öffnung (18) zu vermessen und Daten an die Steuereinrichtung (24) auszugeben, um die Verschmutzung der optischen Öffnung (18) zu bestimmen.

2. Landwirtschaftliche Erntemaschine (1) nach Anspruch 1, **dadurch gekennzeichnet, dass** der optische Sensor (32) als zumindest eine Kamera ausgebildet ist, wobei die Kamera (32) derart ausgerichtet ist, dass die optische Öffnung (18) im Sichtbereich der Kamera (32) liegt.

3. Landwirtschaftliche Erntemaschine (1) nach Anspruch 1 oder 2, **dadurch gekennzeichnet, dass** die Steuereinrichtung (24) dazu vorgesehen und eingerichtet ist, aus den von dem optischen Sensor (32) ausgegebenen Daten ein Schmutzsignal zu ermitteln und basierend auf dem Schmutzsignal eine Reinigungseinrichtung zur Beseitigung der Verschmutzung der optischen Öffnung (18) zu aktivieren, einen Bediener (21) auf eine erforderliche manuelle Beseitigung der Verschmutzung der optischen Öffnung (18) hinzuweisen, und/oder die Bestimmung eines Anteils von zumindest einem Inhaltsstoff der Erntegutprobe anzupassen.

4. Landwirtschaftliche Erntemaschine (1) nach Anspruch 3, **dadurch gekennzeichnet, dass** die Steuereinrichtung (24) dazu vorgesehen und eingerichtet ist, das ermittelte Schmutzsignal mit einem definierten Schwellwert für das Schmutzsignal zu vergleichen und abhängig vom Vergleichsergebnis entweder einerseits, vorzugsweise bei einem Überschreiten des definierten Schwellwerts, die Reinigungseinrichtung zu aktivieren und/oder den Bediener (21) auf die erforderliche manuelle Beseitigung der Verschmutzung hinzuweisen oder andererseits, vorzugsweise bei einem Unterschreiten des definierten Schwellwerts, die Bestimmung eines Anteils von zumindest einem Inhaltsstoff der Erntegutprobe basierend auf dem Schmutzsignal anzupassen.

5. Landwirtschaftliche Erntemaschine (1) nach Anspruch 3 oder 4, **dadurch gekennzeichnet, dass** die Reinigungseinrichtung als Fluidstrahl-Reinigungseinrichtung, vorzugsweise Sprühdüse, ausgebildet ist, wobei die Fluidstrahl-Reinigungseinrichtung derart angeordnet und ausgerichtet ist, dass eine Öffnung der Fluidstrahl-Reinigungseinrichtung, mittels der ein Fluidstrahl zur Beseitigung der Verschmutzung der optischen Öffnung (18) applizierbar ist, in Richtung der optischen Öffnung (18) weist.

6. Landwirtschaftliche Erntemaschine (1) nach einem der Ansprüche 1 bis 5, **dadurch gekennzeichnet, dass** die optische Öffnung (18) aus Mineralglas, vorzugsweise aus Saphirglas, ausgebildet ist.

7. Landwirtschaftliche Erntemaschine (1) einem der Ansprüche 1 bis 6, **dadurch gekennzeichnet, dass** die Lichtquelle (27) dazu vorgesehen und eingerichtet ist, ein breitbandiges Lichtspektrum auszusenden, wobei, vorzugsweise, die Lichtquelle (27) als Halogenlampe ausgebildet ist.

8. Landwirtschaftliche Erntemaschine (1) nach einem der Ansprüche 1 bis 7, **dadurch gekennzeichnet, dass** die optische Messeinrichtung (17) mehrere, vorzugsweise zwei, Lichtquellen (27) umfasst, die dazu vorgesehen und eingerichtet sind, jeweils Licht abzugeben, deren Wellenlängenbereich einander entspricht.

9. Landwirtschaftliche Erntemaschine (1) nach einem der Ansprüche 1 bis 8, **dadurch gekennzeichnet, dass** das diffus reflektierende Innere des integrierenden Hohlraums (26) in dem vorbestimmten Wellenlängenbereich eine Reflektanz von mindestens 99% umfasst, wobei, vorzugsweise, die Oberfläche im Inneren des integrierenden Hohlraums (26) eine Beschichtung mit expandiertem Polytetrafluorethylen, ePTFE, umfasst.

10. Landwirtschaftliche Erntemaschine (1) nach einem der Ansprüche 1 bis 9, **dadurch gekennzeichnet, dass** die optische Messeinrichtung (17) eine Sensoreinrichtung zur Bestimmung einer Strömungsgeschwindigkeit der außerhalb des integrierenden Hohlraums (26) unmittelbar vor der optischen Öffnung (18) befindlichen Erntegutprobe umfasst, wobei die Sensoreinrichtung eine Lichtquelle, vorzugsweise eine Leuchtdiode, LED, oder eine Laserdiode, umfasst, die dazu vorgesehen und eingerichtet ist, Licht eines vorbestimmten Wellenlängenbereichs in den integrierenden Hohlraum (26) abzugeben, wobei die Sensoreinrichtung einen optischen Sensor, vorzugsweise eine Kamera, umfasst, der dazu vorgesehen und eingerichtet ist, von der Lichtquelle der Sensoreinrichtung abgegebenes Licht aus dem integrierenden Hohlraum (26) zu empfangen, die außerhalb des integrierenden Hohlraums (26) unmittelbar vor der optischen Öffnung (18) befindliche Erntegutprobe zu vermessen und Daten an die Steuereinrichtung (24) auszugeben, um die Strömungsgeschwindigkeit der Erntegutprobe zu bestimmen.

11. Landwirtschaftliche Erntemaschine (1) nach einem der Ansprüche 1 bis 10, **dadurch gekennzeichnet, dass** die optische Messeinrichtung (17) eine Sensoreinrichtung zur Bestimmung einer Chlorophyll-Bande der außerhalb des integrierenden Hohlraums (26) unmittelbar vor der optischen Öffnung (18) befindlichen Erntegutprobe umfasst, wobei die Sensoreinrichtung eine Lichtquelle, vorzugsweise eine Leuchtdiode, LED, umfasst, die dazu vorgesehen und eingerichtet ist, Licht eines vorbestimmten Wellenlängenbereichs in den integrierenden Hohlraum (26) abzugeben, wobei die Sensoreinrichtung einen als Photodiode ausgebildeten optischen Sensor umfasst, der dazu vorgesehen und eingerichtet ist, von der Lichtquelle der Sensoreinrichtung abgegebenes Licht aus dem integrierenden Hohlraum (26) zu empfangen, die außerhalb des integrierenden Hohlraums (26) unmittelbar vor der optischen Öffnung (18) befindliche Erntegutprobe zu vermessen und Daten an die Steuereinrichtung (24) auszugeben, um die Chlorophyll-Bande der Erntegutprobe zu bestimmen.

12. Landwirtschaftliche Erntemaschine (1) nach einem der Ansprüche 1 bis 11, **dadurch gekennzeichnet, dass** zumindest auf dem direkten Weg zwischen der Lichtquelle (27) der optischen Messeinrichtung (17) und der optischen Öffnung (18) eine Lichtsperre (31) angeordnet ist, welche verhindert, dass Licht von der Lichtquelle (27) der optischen Messeinrichtung (17) direkt zur optischen Öffnung (18) gelangt.

13. Landwirtschaftliche Erntemaschine (1) nach einem der Ansprüche 1 bis 12, **dadurch gekennzeichnet, dass** die optische Messeinrichtung (17) eine erste Abdeckung umfasst, wobei die erste Abdeckung zwischen die Lichtquelle (27) der optischen Messeinrichtung (17) und den integrierenden Hohlraum (26) geschoben werden kann, sodass die erste Abdeckung verhindert, dass Licht der Lichtquelle (27) den integrierenden Hohlraum (26) erreicht, und/oder die optische Messeinrichtung (17) eine zweite Abdeckung umfasst, wobei die zweite Abdeckung dazu vorgesehen und eingerichtet ist, die optische Öffnung (18) temporär so zu verschließen, dass die zweite Abdeckung verhindert, dass Licht durch die optische Öffnung (18) in den integrierenden Hohlraum (26) eindringen kann, wobei die erste und/oder die zweite Abdeckung diffus reflektierend sind.

14. Landwirtschaftliche Erntemaschine (1) nach Anspruch 13, **dadurch gekennzeichnet, dass** die optische Messeinrichtung (17) zumindest einen Aktuator zur Verlagerung der ersten und/oder zweiten Abdeckung umfasst, wobei die Steuereinrichtung (24) dazu vorgesehen und eingerichtet ist, ein Referenzierungssignal zu erzeugen und basierend auf dem Referenzierungssignal den zumindest einen Aktuator zur Verlagerung der ersten und/oder zweiten Abdeckung anzusteuern.

15. Landwirtschaftliche Erntemaschine (1) nach einem der Ansprüche 1 bis 14, **dadurch gekennzeichnet, dass** die landwirtschaftliche Erntemaschine (1) eine Auswurfvorrichtung (13) zum Überladen von verarbeitetem Erntegut umfasst, wobei die optische Messeinrichtung (17) an der Auswurfvorrichtung (13) angeordnet ist.
